(19) Europäisches Patentamt
European Patent Office
Office européen des brevets

(11) EP 2 568 631 B1

(12) EUROPÄISCHE PATENTSCHRIFT

(45) Veröffentlichungstag und Bekanntmachung des Hinweises auf die Patenterteilung:
25.04.2018 Patentblatt 2018/17

(51) Int Cl.:
H04J 3/06 (2006.01)     H04L 7/04 (2006.01)

(21) Anmeldenummer: 11180739.2

(22) Anmeldetag: 09.09.2011

(54) **Verfahren zur Übertragung von Synchronisationsnachrichten in einem Kommunikationsnetz**

Method for transmitting synchronisation messages in a communications network

Procédé de transmission de messages de synchronisation dans un réseau de communication

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
13.03.2013 Patentblatt 2013/11

(73) Patentinhaber: Siemens Aktiengesellschaft
80333 München (DE)

(72) Erfinder:
• **Buhl, Michael Bernhard**
81373 München (DE)
• **Obradovic, Dragan Dr.**
85521 Ottobrunn (DE)
• **Steindl, Günter**
92284 Poppenricht (DE)
• **Wolfrum, Philipp Dr.**
81539 München (DE)

(56) Entgegenhaltungen:
• **CHONGNING NA ET AL: "Clock synchronization based on distributed hidden state estimation", PRECISION CLOCK SYNCHRONIZATION FOR MEASUREMENT, CONTROL AND COMMUNICATION, 2009. ISPCS 2009. INTERNATIONAL SYMPOSIUM ON, IEEE, PISCATAWAY, NJ, USA, 12. Oktober 2009 (2009-10-12), Seiten 1-6, XP031570865, ISBN: 978-1-4244-4391-8**

**Beschreibung**

Die Erfindung betrifft ein Verfahren zur Übertragung von Synchronisationsnachrichten in einem Kommunikationsnetz sowie einen Knoten in einem Kommunikationsnetz und ein entsprechendes Kommunikationsnetz.

In vielen technischen Gebieten werden Kommunikationsnetze dazu verwendet, verteilte Prozesse auf einer Vielzahl von Einheiten automatisch auszuführen. Insbesondere in industriellen Automatisierungsnetzen ist es dabei sehr wichtig, dass die automatischen Prozesse exakt aufeinander abgestimmt sind. Hierzu umfassen die einzelnen Knoten in dem Kommunikationsnetz entsprechende Uhren, welche auf eine Referenzuhr in einem Referenzknoten synchronisiert werden. Der Referenzknoten wird häufig auch als Master-Knoten bezeichnet, wohingegen die anderen Knoten mit den internen Uhren in der Regel Slave-Knoten genannt werden.

Aus dem Stand der Technik bekannte Protokolle zur Synchronisation der Uhren in einem Kommunikationsnetz sind in den industriellen Standards IEEE 1588, IEEE1588v2, IEC 61158 und IEEE 802.1AS spezifiziert. Gemäß diesen Protokollen werden Synchronisationsnachrichten in der Form von Paketen mit Zeitstempeln ausgetauscht. Dabei wird eine Synchronisationsnachricht ausgehend von dem Master-Knoten aufeinander folgend zwischen den Slave-Knoten weitergeleitet. Die von dem Master-Knoten ausgehende Synchronisationsnachricht enthält einen Zeitstempel des ersten Taktzählzustands gemäß der Referenzuhr zum Zeitpunkt des Aussendens der Nachricht. Die Slave-Knoten verarbeiten diese Information und senden erneut Synchronisationsnachrichten aus. Dabei addiert jeder Slave-Knoten die geschätzten Verzögerungen zwischen dem Aussendezeitpunkt der Synchronisationsnachricht im vorhergehenden Knoten und seinem eigenen Aussendezeitpunkt zu dem ersten Taktzählzustand in der empfangenen Synchronisationsnachricht. Der sich hierdurch ergebende Taktzählzustand wird in die auszusendende Synchronisationsnachricht eingefügt. Gegebenenfalls kann ein Slave-Knoten auch den ersten Taktzählzustand aus der vom Master-Knoten ausgesendeten Synchronisationsnachricht in einem ersten Feld speichern und die geschätzten Verzögerungen in einem separaten zweiten Feld aufaddieren. Basierend auf den Informationen in den empfangenen Synchronisationsnachrichten kann jeder Slave-Knoten seine zweiten Taktzählzustände gemäß seiner internen Uhr auf die ersten Taktzählzustände gemäß der Referenzuhr synchronisieren.

Aus der Veröffentlichung CHONGNING Na et al.:"Clock synchronization based on distributed hidden state estimation", PRECISION CLOCK SYNCHRONIZATION FOR MEASUREMENT, CONTROL AND COMMUNICATION, 2009. ISPCS 2009. INTERNATIONAL SYMPOSIUM ON, IEEE, Piscataway, NJ, USA, October 12, 2009, pp1-6, XP031570865, ISBN: 978-1-4244-4391-8, ist ein Verfahren zur Übertragung von Synchronisationsnachrichten in einem Kommunikationsnetz mit einer Mehrzahl von Knoten bekannt, wobei die Knoten einen ersten Knoten und einen oder mehrere zweite Knoten umfassen. Der erste Knoten generiert erste Taktzählzustände gemäß einer Referenzuhr und der oder die zweiten Knoten generieren jeweils zweite Taktzählzustände gemäß einer internen Taktfrequenz. In dem Verfahren werden Synchronisationsnachrichten ausgehend von dem ersten Knoten aufeinander folgend von einem Knoten zu einem weiteren Knoten übertragen und jede Synchronisationsnachricht enthält eine Zeitinformation, welche zur Synchronisation der internen Uhren des oder der zweiten Knoten auf die Referenzuhr dient. In einem jeweiligen zweiten Knoten wird die Zeitinformation der Synchronisationsnachricht basierend auf einer Verzögerungszeit auf den Sendezeitpunkt der Synchronisationsnachricht in dem jeweiligen zweiten Knoten aktualisiert. Hierbei wird der erste Taktzählzustand unter Verwendung eines Schätzverfahrens geschätzt, welche auf einem stochastischen Modell und dem Summen-Produkt-Algorithmus basiert.

Da die internen Uhren in den Slave-Knoten in der Regel nicht exakt mit der Referenzuhr des Master-Knotens übereinstimmen, wird in einen jeweiligen Slave-Knoten das Verhältnis der Reeerenztaktfrequenz zur internen Taktfrequenz abgeschätzt. Dieses Verhältnis, welches auch als RCF-Wert bezeichnet wird (RCF = Rate Compensation Factor), wird dazu benutzt, um entsprechende Kompensationsintervalle festzulegen. Bei der Messung einer Verzögerung in dem jeweiligen Slave basierend auf seiner internen Uhr wird sein zweiter Taktzählzustand immer dann verändert, wenn die gemessene Verzögerung den Endpunkt eines Kompensationsintervalls überschreitet. Dieses Verfahren weist den Nachteil auf, dass die hierdurch bestimmten Verzögerungszeiten die Abweichungen zwischen der internen Uhr des Slaves und der Referenzuhr des Masters nur teilweise kompensieren. Beispielsweise findet überhaupt keine Kompensation der Verzögerungszeit statt, wenn diese innerhalb eines Kompensationsintervalls liegt. Ebenso wird deutlich zu viel kompensiert, wenn eine sehr kurze Verzögerungszeit den Endpunkt eines Kompensationsintervalls überschreitet.

Aufgabe der Erfindung ist es deshalb, ein Verfahren zur Übertragung von Synchronisationsnachrichten zu schaffen, in denen die darin enthaltene Zeitinformation mit hoher Genauigkeit bestimmt wird.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Übertragung von Synchronisationsnachrichten in einem Kommunikationsnetz mit einer Mehrzahl von Knoten, wobei die Knoten einen ersten Knoten und einen oder mehrere zweite Knoten umfassen. Der erste Knoten generiert erste Taktzählzustände gemäß einer Referenztaktfrequenz einer Referenzuhr und der oder die zweiten Knoten generieren jeweils zweite Taktzählzustände gemäß einer internen Taktfrequenz. In dem Verfahren werden Synchronisationsnachrichten ausgehend von dem ersten Knoten aufeinander folgend von einem Knoten zu einem weiteren Knoten übertragen und jede Synchronisationsnachricht enthält eine Zeitinformation, welche zur Synchronisation der internen Uhren des oder der zweiten Knoten auf die Referenzuhr dient. In einem jeweiligen zweiten Knoten wird die Zeitinformation der Synchronisationsnachricht basierend auf einer Verzögerungszeit auf den Sendezeitpunkt der Synchronisationsnachricht in dem jeweiligen zweiten Knoten aktualisiert.

In dem erfindungsgemäßen Verfahren werden in einem jeweiligen zweiten Knoten zumindest eines Teils der zweiten Knoten die dort gemessenen Verzögerungszeiten geeignet verändert, um Unterschiede zwischen der Referenztaktfrequenz und der internen Taktfrequenz zu berücksichtigen. Dabei sind in an sich bekannter Weise Kompensationsintervalle basierend auf aufeinander folgenden Kompensationszeitpunkten vorgegeben, wodurch eine Anpassung zumindest eines Zeitabschnitts der Verzögerungszeit, der im zweiten Knoten gemäß der internen Taktfrequenz des zweiten Knotens gemessen wird, an die Referenztaktfrequenz über eine Veränderung der zweiten Taktzählzustände durchführbar ist. Durch den Begriff "durchführbar" wird zum Ausdruck gebracht, dass in dem erfindungsgemäßen Verfahren diese Anpassung je nach Anwendungsfall durchgeführt werden kann oder auch nicht durchgeführt werden kann. Es ist jedoch erforderlich, dass ein geeignetes Kompensationsintervall festgelegt ist.

Im erfindungsgemäßen Verfahren werden die Kompensationsintervalle jeweils in kleinere Kompensationszeitspannen basierend auf einer Anzahl von zweiten Kompensationszeitpunkten unterteilt, wobei die Anzahl an Überschreitungen von ersten und zweiten Kompensationszeitpunkten durch den zumindest einen Zeitabschnitt erfasst wird. Für den zumindest einen Zeitabschnitt wird dann ein kompensierter Zeitwert bestimmt, indem der Zeitwert gemäß der Anzahl von zweiten Taktzählzuständen, die innerhalb des zumindest einen Zeitabschnitts gezählt werden, um das Produkt aus der Anzahl von Überschreitungen und einer Kompensationszeiteinheit verändert wird, wobei die Kompensationszeiteinheit der Periodendauer der internen Taktfrequenz des jeweiligen zweiten Knotens (d.h. der Zeitspanne zwischen zwei benachbarten zweiten Taktzählzuständen) geteilt durch die Anzahl von Kompensationszeitspannen innerhalb eines Kompensationsintervalls entspricht. Der kompensierte Zeitwert wird dann zur Aktualisierung der Zeitinformation in der Synchronisationsnachricht verwendet. Je nachdem, ob die Referenzuhr schneller oder langsamer als die entsprechende interne Uhr des zweiten Knotens läuft, wird der obige Zeitwert gemäß der Anzahl von zweiten Taktzählzuständen um das Produkt erhöht oder erniedrigt.

Der obige Begriff des Zeitwerts bzw. der Kompensationszeiteinheit ist weit zu verstehen. Vorzugsweise bezieht sich dieser Wert bzw. diese Einheit auf eine Zeitangabe in Sekunden bzw. entsprechend kleinere Sekundeneinheiten (wie z.B. Nanosekunden). Gegebenenfalls kann der Zeitwert auch durch eine Anzahl von weiteren Taktzählzuständen repräsentiert werden, wobei der Abstand zwischen benachbarten weiteren Taktzuständen einer Kompensationszeiteinheit entspricht.

Dem erfindungsgemäßen Verfahren liegt die Erkenntnis zugrunde, dass die Zeitinformation in den Synchronisationsnachrichten in der Regel in einer höheren Auflösung als die Taktfrequenz der internen Uhr des entsprechenden zweiten Knotens angegeben ist. Diese Erkenntnis macht man sich zunutze, um (virtuelle) zweite Kompensationszeitpunkte einzuführen, basierend auf denen ein Kompensationsintervall in kleinere Intervalle eingeteilt wird. Hierdurch wird eine genauere Anpassung eines entsprechenden Zeitabschnitts der Verzögerungszeit erreicht, so dass die entsprechende Verzögerungszeit mit höherer Genauigkeit bestimmt wird.

In einer besonders bevorzugten Ausführungsform ist die oben beschriebene Anpassung des zumindest einen Zeitabschnitts der Verzögerungszeit gemäß der internen Taktfrequenz des jeweiligen zweiten Knotens an die Referenztaktfrequenz derart durchführbar, dass im Falle, dass der zumindest eine Zeitabschnitt einen ersten Kompensationszeitpunkt überschreitet, die Anzahl von zweiten Taktzählzuständen, die für den zumindest einen Zeitabschnitt bis zum Überschreiten des ersten Kompensationszeitpunkts gezählt werden, um einen zweiten Taktzählzustand verändert wird. Hierdurch wird eine Kompensation bereits während der Messung des zumindest einen Zeitabschnitts der Verzögerungszeit erreicht.

In einer weiteren, besonders bevorzugten Ausführungsform des erfindungsgemäßen Verfahrens läuft die Bestimmung des kompensierten Zeitwerts derart ab, dass im Falle, dass der zumindest eine Zeitabschnitt einen zweiten Kompensationszeitpunkt überschreitet, der Zeitwert gemäß der Anzahl von zweiten Taktzählzuständen, die innerhalb des zumindest einen Zeitabschnitts bis zum Überschreiten des zweiten Kompensationszeitpunkts gezählt werden, um die Kompensationszeiteinheit verändert wird. Auch bei dieser Variante wird bereits bei der Messung des zumindest einen Zeitabschnitts eine geeignete Kompensation durchgeführt.

Wie bereits oben erwähnt, kann die Anpassung des zumindest einen Zeitabschnitts der Verzögerungszeit gemäß der internen Taktfrequenz des jeweiligen zweiten Knotens an die Referenztaktfrequenz durchgeführt werden oder auch nicht durchgeführt werden. Im Falle, dass diese Anpassung durchgeführt wird, wird in einer bevorzugten Ausführungsform im Falle, dass der zumindest eine Zeitabschnitt einen ersten Kompensationszeitpunkt überschreitet, die Anpassung rückgängig gemacht. Hierdurch wird sichergestellt, dass es nicht zu einer fehlerhaften Kompensation sowohl basierend auf dem Kompensationsintervall als auch basierend auf den Kompensationszeitspannen kommt.

In einer weiteren Variante des erfindungsgemäßen Verfahrens wird die Anpassung des zumindest einen Zeitabschnitts der Verzögerungszeit gemäß der internen Taktfrequenz des jeweiligen zweiten Knotens an die Referenztaktfrequenz tatsächlich durchgeführt, wobei hierzu die oben beschriebene Variante verwendet wird, bei der bei Überschreiten eines ersten Kompensationszeitpunkts die Anzahl von zweiten Taktzuständen um einen zweiten Taktzählzustand verändert wird. In dieser Variante wird der kompensierte Zeitwert vorzugsweise derart bestimmt, dass im Falle, dass der zumindest eine Zeitabschnitt einen ersten Kompensationszeitpunkt überschreitet, der Zeitwert gemäß der Anzahl von zweiten Taktzählzuständen, die innerhalb des zumindest einen Zeitabschnitts bis zum Überschreiten des ersten Kompensationszeitpunkts gezählt werden und basierend auf der Anpassung verändert werden, um den Zeitwert gemäß der Zeitdifferenz zwischen der Periodendauer der internen Taktfrequenz des jeweiligen zweiten Knotens und der Kompensationszeiteinheit korrigiert wird.

In einer weiteren Variante der Erfindung, in der die oben beschriebene Anpassung des zumindest einen Zeitabschnitts gemäß der internen Taktfrequenz des jeweiligen zweiten Knotens an die Referenztaktfrequenz nicht durchgeführt wird, erfolgt die Bestimmung des kompensierten Zeitwerts derart, dass im Falle, dass der zumindest eine Zeitabschnitt einen ersten Kompensationszeitpunkt überschreitet, der Zeitwert gemäß der Anzahl von zweiten Taktzählzuständen, die innerhalb des zumindest einen Zeitabschnitts bis zum Überschreiten des ersten Kompensationszeitpunkts gezählt werden, um die Kompensationszeiteinheit verändert wird. D. h., das Überschreiten von ersten Kompensationszeitpunkten wird analog zum Überschreiten von zweiten Kompensationszeitpunkten behandelt.

In einer weiteren Variante des erfindungsgemäßen Verfahrens ist der zumindest eine Zeitabschnitt eine interne Verarbeitungszeit in dem jeweiligen zweiten Knoten zwischen Empfang der Synchronisationsnachricht und dem Aussenden der Synchronisationsnachricht. Diese Zeitspanne wird in der Regel als Bridge-Delay bezeichnet. Gegebenenfalls besteht auch die Möglichkeit, die Zeitspanne zwischen dem Aussenden einer Synchronisationsnachricht im vorhergehenden zweiten Knoten und dem Empfang der Synchronisationsnachricht im betrachteten zweiten Knoten zu kompensieren. Da diese Zeitspanne, welche auch als Line-Delay bezeichnet wird, jedoch sehr kurz ist, kann für diese Verzögerung gänzlich auf eine Kompensation verzichtet werden.

Das erfindungsgemäße Verfahren basiert vorzugsweise auf einem der oben erwähnten Standards IEEE 1588 bzw. IEEE 1588v2 bzw. IEC 61158 bzw. IEEE 802.1AS. Im Besonderen basiert die Erfindung auf dem Standard IEC 61158 ed2.0 Typ 10, der das PTCP-Protokoll beschreibt (PTCP = Precision Transparent Clock Protocol). Bei dem erwähnten Standard IEEE 802.1AS handelt es sich um ein Derivat des Protokolls PTPv2 (PTP = Precision Time Protocol). Der Standard IEEE 1588 betrifft das Protokoll PTPv1 bzw. PTPv2.

In einer weiteren Ausführungsform kommunizieren die Knoten in dem Kommunikationsnetz basierend auf dem bekannten PROFINET-Standard. Ferner wird das erfindungsgemäße Verfahren vorzugsweise in einem Kommunikationsnetz in einer industriellen Automatisierungsanlage eingesetzt.

Die Erfindung betrifft darüber hinaus einen Knoten zur Verwendung als zweiter Knoten in dem erfindungsgemäßen Verfahren bzw. einer oder mehrerer bevorzugter Varianten des erfindungsgemäßen Verfahrens. D.h., in dem Knoten sind Kompensationsintervalle vorgegeben, und der Knoten kann mittels entsprechend kleinerer Kompensationszeitspannen einen kompensierten Zeitwert berechnen, der zur Aktualisierung der Zeitinformation in der Synchronisationsnachricht verwendet wird.

Die Erfindung betrifft darüber hinaus ein Kommunikationsnetz mit einer Mehrzahl von Knoten, wobei das Kommunikationsnetz einen ersten Knoten und zumindest einen erfindungsgemäßen zweiten Knoten umfasst. Das Kommunikationsnetz ist dabei vorzugsweise zur Ausführung einer oder mehrerer der oben beschriebenen bevorzugten Varianten des erfindungsgemäßen Verfahrens ausgelegt.

Ausführungsbeispiele der Erfindung werden nachfolgend anhand der beigefügten Figuren detailliert beschrieben.

Es zeigen:

Fig. 1          eine schematische Darstellung einer Mehrzahl von Netzknoten in einem Kommunikationsnetz, zwischen denen auf der Basis des erfindungsgemäßen Verfahrens Synchronisationsnachrichten übermittelt werden;

Fig. 2          ein Diagramm, welches die Ermittlung von Zeitverzögerungen in einem Netzknoten eines Kommunikationsnetzes basierend auf dem Stand der Technik verdeutlicht;

Fig. 3          ein Diagramm, welches die Ermittlung von Zeitverzögerungen in einem Netzknoten eines Kommunikationsnetzes basierend auf einer Ausführungsform der Erfindung verdeutlicht;

Fig. 4 und Fig. 5          Diagramme, welche Eigenschaften eines bekannten Verfahrens bzw. einer Ausführungsform des erfindungsgemäßen Verfahrens wiedergeben.

Das erfindungsgemäße Verfahren wird vorzugsweise in einer industriellen Automatisierungsanlage eingesetzt, bei der verteilte Komponenten der Anlage miteinander kommunizieren, um Fertigungsabläufe, z.B. bei der Automobilherstellung, zu steuern. Hierzu kommunizieren die einzelnen Komponenten über ein Kommunikationsnetz drahtlos und/oder drahtgebunden miteinander. Die Komponenten stellen somit Netzknoten des Kommunikationsnetzes dar.

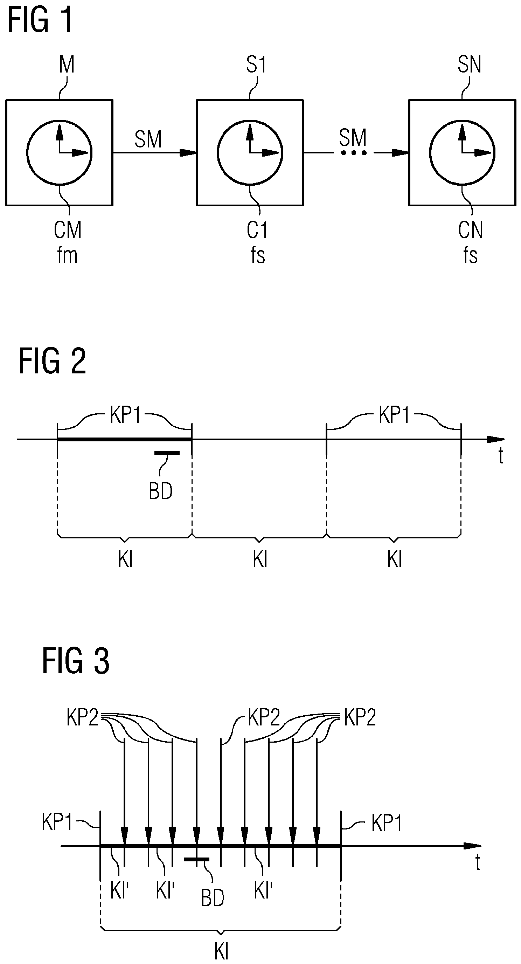

In der Ausführungsform gemäß Fig. 1 sind beispielhaft als Netzknoten sog. Slaves S1 bis SN gezeigt, wobei jeder Slave über eine entsprechende interne Uhr C1, ..., CN verfügt. Jede dieser Uhren arbeitet in einer vorgegebenen Slave-Taktfrequenz fs, welche für unterschiedliche Slaves gegebenenfalls unterschiedlich sein kann. Darüber hinaus ist in dem Kommunikationsnetz der Fig. 1 ein sog. Masterelement M (auch als Master bezeichnet) vorgesehen, welches über eine Referenzuhr CM verfügt, welche eine Referenztaktfrequenz fm vorgibt, auf die alle internen Uhren C1, ..., CN der Slaves abgestimmt werden sollen. Um dies zu erreichen, werden Synchronisationsnachrichten SM vom Masterelement M ausgesendet. Jede dieser Synchronisationsnachrichten enthält hierbei eine Zeitinformation basierend auf der Uhr CM, wobei diese Zeitinformation die seit dem Aussenden der Synchronisationsnachricht beim Masterelement abgelaufene Zeit zum Sendezeitpunkt der Synchronisationsnachricht im jeweiligen Slave repräsentiert.

Das Masterelement M und die einzelnen Netzknoten S1 bis SN kommunizieren in einer Reihe miteinander, wobei Synchronisationsnachrichten vom Masterelement M an den Knoten S1 und von diesem an den Knoten S2 usw. bis zum Knoten SN übermittelt werden. Um eine exakte Synchronisation in den einzelnen Slaves zu erreichen, muss der Taktzählzustand in den Synchronisationsnachrichten SM in den einzelnen Slaves aktualisiert werden. Deshalb wird in jedem Slave die Zeitverzögerung geschätzt, die zwischen dem Aussenden einer Synchronisationsnachricht vom vorhergehenden Slave (bzw. vom Masterelement) bis zum Aussenden der Synchronisationsnachricht vom jeweiligen Slave zum nächsten Slave benötigt wird. Diese Zeitverzögerung setzt sich aus der Zeitspanne LD und BD zusammen, wobei diese Zeitspannen für jeden Slave unterschiedlich sein können. LD ist hierbei die Zeitspanne, welche zur Übermittlung der Nachricht vom vorhergehenden Slave Si-1 zum nächsten Slave Si benötigt wird (LD = Line Delay). BD ist die Verarbeitungszeit, welche im Slave Si zum Verarbeiten einer empfangenen Synchronisationsnachricht bis zum Aussenden der Synchronisationsnachricht zum nächsten Slave benötigt wird (BD = Bridge Delay). Diese Verzögerungszeit wird in dem jeweiligen Slave in Takten gemäß der Slave-Taktfrequenz angegeben.

Bei der Berechnung der Bridge-Delay bzw. Line-Delay ist zu berücksichtigen, dass die Quarz-Frequenz der internen Uhr eines Slaves nicht exakt mit der Quarz-Frequenz der Referenzuhr des Masterelements übereinstimmt. Im Folgenden wird davon ausgegangen, dass das Masterelement und ein jeweiliger Slave gleich getaktet sind und somit im Idealfall die Quarz-Frequenzen identisch sind. Die nachfolgenden Betrachtungen sind jedoch auch anwendbar, wenn die Taktung des MasterElements anders ist als die Taktung des Slave-Elements. In diesem Fall sind die entsprechenden Quarz-Ticks im Master oder im Slave mit einem entsprechenden Faktor zu multiplizieren, der die unterschiedliche Taktung herausrechnet.

Um bei der Ermittlung der Line- bzw. Bridge-Delay die Abweichungen in den Quarz-Frequenzen zu berücksichtigen, wird das Verhältnis der Quarz-Frequenzen zwischen dem Masterelement und dem Slave geschätzt. Dieses Verhältnis wird als RCF (RCF = Rate Compensation Factor) bezeichnet und ist wie folgt definiert:

$$RCF = \frac{\Delta Master}{\Delta Slave} \qquad (1)$$

Hierbei bezeichnet ∆Master und ∆Slave jeweils die Anzahl von Quarz-Ticks, die auf dem Master bzw. Slave innerhalb eines (absolut) gleichen Zeitraums vergehen. Mithilfe dieses Werts kann nun ein Slave in einfacher Weise eine lokal von ihm gemessene Zeitspanne in eine Zeitspanne gemäß der Zeit des Masterelements wie folgt überführen:

$$\Delta t_{Master} = RCF \cdot \Delta t_{Slave} \qquad (2)$$

In der hier beschriebenen Ausführungsform wird mit diesem RCF-Wert die Bridge-Delay korrigiert, um hierdurch einen genauen Wert für diese Verzögerung zu erhalten, der dann in die Synchronisationsnachricht eingefügt wird. Gegebenenfalls kann auch die Line-Delay entsprechend korrigiert werden. In der hier beschriebenen Ausführungsform wird die Korrektur für die Line-Delay aufgrund deren Kürze nicht durchgeführt.

Die obige Umrechnung der Zeitdifferenz eines Slaves in die Zeitdifferenz des Masters wird nicht direkt über die Gleichung (2) durchgeführt, sondern es wird hierfür ein sog. RCF-Intervall T$_{RCF}$ verwendet. Dieses Intervall gibt an, nach wie vielen lokalen Quarz-Ticks bzw. Taktzählzuständen der Slave seinen Quarz um einen Tick vor- oder zurückstellen muss, so dass er dann genauso viele Ticks bzw. Taktzählzustände gemacht hat wie der Master. Das RCF-Intervall ist wie folgt definiert:

$$T_{RCF} = \frac{1}{RCF - 1} \qquad (3)$$

Da Master und Slave die gleichen Taktungen aufweisen bzw. unterschiedliche Taktungen bereits herausgerechnet wurden, liegt der Wert von RCF im Bereich von 1, wobei er größer 1 ist, wenn der Master etwas schneller als der Slave läuft, und wobei er kleiner 1 ist, wenn der Master etwas langsamer als der Slave läuft. Als Intervall $T_{RCF}$ ergibt sich dabei eine Anzahl von Taktzählzuständen bzw. Ticks, die im Falle, dass die Uhr des Masterelements schneller als der Slave läuft, positiv ist und im anderen Fall negativ ist.

Basierend auf diesem RCF-Intervall, welches im Folgenden auch als Kompensationsintervall bezeichnet wird, werden gemäß dem Stand der Technik die Taktzählzustände des entsprechenden Slaves angepasst, wie nachfolgend anhand von Fig. 2 erläutert wird. Diese Figur verdeutlicht entlang der Zeitachse t eine Mehrzahl von aufeinanderfolgenden (konstanten) Kompensationsintervallen KI, deren Länge jeweils der oben beschriebenen Zeit $T_{RCF}$ gemessen in einer entsprechenden Anzahl von Taktzählzuständen des Slaves entspricht. Die einzelnen Kompensationsintervalle KI starten bzw. enden an entsprechenden (ersten) Kompensationszeitpunkten KP1. Innerhalb des Kompensationsintervalls KI am Anfang der Zeitachse wird durch den Slave die Bridge-Delay BD erfasst, welche deutlich kürzer als das Kompensationsintervall ist. Tritt nunmehr der Fall auf, dass sich die Bridge-Delay BD über einen Kompensationszeitpunkt KP1 hinweg erstreckt, erfolgt ein Heraufsetzen bzw. Heruntersetzen des Taktzählzustands des Slaves um 1, wobei der Taktzählzustand bei einem negativen Wert von $T_{RCF}$ herabgesetzt wird und bei einem positiven Wert von $T_{RCF}$ heraufgesetzt wird.

Ein großer Nachteil der soeben beschriebenen Vorgehensweise zur Anpassung der Taktzählzustände besteht darin, dass jedes erfasste Zeitintervall, welches länger oder kürzer als das Kompensationsintervall KI ist, falsch umgerechnet wird. Dies ergibt sich anschaulich für die Bridge-Delay BD aus Fig. 1. Wie dort gezeigt, ist die Bridge-Delay BD vollständig innerhalb des Kompensationsintervalls KI enthalten. In diesem Fall findet überhaupt keine Kompensation der Bridge-Delay statt, d.h. diese Delay wird in keiner Weise an die Uhr des Masterelements angepasst. Falls sich die Bridge-Delay BD über einen Kompensationszeitpunkt erstreckt, wird diese Zeitspanne um einen ganzen Taktzählzustand verändert und somit deutlich zu viel kompensiert, was ebenfalls nicht zu einem korrekt angepassten Wert führt.

Da der lokale Quarz eines Slaves freilaufend ist und nicht zu Beginn einer Bridge-Delay in definierter Weise auf 0 gesetzt wird, findet somit eine Kompensation des lokalen Quarzes in zufälliger Weise während der Erfassung der Bridge-Delay im Slave statt. Die Wahrscheinlichkeit für eine Kompensation wird im Folgenden mit $p_0$ bezeichnet und ergibt sich bei Bridge-Delays kleiner als $T_{RCF}$ aus der Länge $T_{BD}$ der Bridge-Delay in Taktzählzuständen des Slaves und dem RCF-Wert $T_{RCF}$ wie folgt:

$$p_0 = \frac{T_{BD}}{\left| T_{RCF} \right|} \qquad (4)$$

Im Unterschied zu der oben beschriebenen Vorgehensweise wird in der nachfolgend beschriebenen Ausführungsform des erfindungsgemäßen Verfahrens die Bridge-Delay deutlich genauer an die Uhr des Masterelements angepasst. Es wird dabei berücksichtigt, dass die Zeitstempel, welche in der Synchronisationsnachricht übermittelt werden, in einer höheren zeitlichen Auflösung als die Uhr auf dem Slave angegeben sind. Liegt die zeitliche Auflösung der Uhr eines Slaves bei 10 ns (100 MHz Quarz), so werden die Zeitstempel innerhalb der Synchronisationsnachricht üblicherweise in einem Bereich von 1 ns aufgelöst. Diese bessere Auflösung wird erfindungsgemäß dadurch berücksichtigt, dass das in Fig. 2 gezeigte Kompensationsintervall KI nochmals feiner unterteilt wird, wobei diese Unterteilung derart gewählt ist, dass sie in den Synchronisationsnachrichten aufgelöst werden kann. Dies wird anhand von Fig. 3 verdeutlicht.

In Fig. 3 ist in Analogie zu Fig. 2 entlang der Zeitachse t ein Kompensationsintervall KI wiedergegeben, welches einem Kompensationsintervall aus Fig. 2 entspricht. Ebenso sind die entsprechenden Kompensationszeitpunkte KP1 am Anfang bzw. Ende dieses Intervalls angegeben. Ferner ist wiederum die im Slave-Knoten gemessene Bridge-Delay BD angedeutet. Beispielhaft wird davon ausgegangen, dass die Periode der Slave-Taktfrequenz bei 10 ns liegt, wohingegen Zeitstempel in der Synchronisationsnachricht mit einer Auflösung von 1 ns angegeben werden. Da die Auflösung der Zeitstempel somit zehnmal größer als die Auflösung gemäß der Slave-Taktfrequenz ist, wird das Kompensationsintervall KI nunmehr in zehn gleich große kleinere Kompensationsintervalle bzw. Kompensationszeitspannen KI' eingeteilt. Dies geschieht dadurch, dass entsprechende virtuelle (zweite) Kompensationszeitpunkte KP2 eingeführt werden, die zwischen den Kompensationszeitpunkte KP1 des ursprünglichen Kompensationsintervalls KI liegen. Mithilfe der virtuellen Kompensationszeitpunkten KP2 erfolgt nunmehr die Umrechnung von dem Zeitsystem des Slaves in das Zeitsystem des Masterelements, und zwar mit der zeitlichen Auflösung des Zeitstempels von einer Nanosekunde. Dabei können die folgenden zwei Varianten zur Umrechnung verwendet werden.

In der ersten Variante wird der Zähler bzw. Taktzählzustand S für den Quarz des Slaves weiterhin zu den ursprünglichen Kompensationszeitpunkten KP1 um ein Inkrement verändert. In diesem Fall wird ein zweiter Zähler C eingeführt. Dieser Zähler wird am Anfang der Zeitmessung einer Bridge-Delay auf 0 gesetzt. Beim Überschreiten eines virtuellen Kompensationszeitpunkts KP2 wird der Zähler C um ein Inkrement erhöht bzw. verringert (je nach Vorzeichen von $T_{RCF}$). Bei Überschreiten eines tatsächlichen Kompensationszeitpunkts KP1 wird der Zähler um neun Inkremente verringert bzw. erhöht, um hierdurch die durchgeführte Kompensation zum Zeitpunkt KP1 zu berücksichtigen. Gemäß dieser Kompensation wird der Taktzählzustand des Slaves um eins (und damit um 10ns) erhöht bzw. verringert.

Die Umrechnung der Zeitmessung $\Delta S = S(t_2) - S(t_1)$, welche der Anzahl von Taktzählzuständen des Slaves zwischen Anfang t1 und Ende t2 der Bridge-Delay entspricht, in die Zeit des Mastersystems ergibt sich dann wie folgt:

$$T_{BD} = \Delta S \cdot 10ns + C \cdot 1ns$$
$$\Delta S = S(t_2) - S(t_1)$$

$$(5)$$

Dabei ist $T_{BD}$ ein Zeitwert, der in der Auflösung von einer Nanosekunde angegeben ist und somit in der Synchronisationsnachricht aufgelöst werden kann.

In einer zweiten Variante der Umrechnung von dem Slave-Zeitsystem in das Master-Zeitsystem wird der Taktzählzustand bzw. der Zähler S für den Quarz des Slaves nicht mehr zu den ursprünglichen Kompensationszeitpunkten KP1 verändert, sondern der Zähler läuft mit der Frequenz des Slaves frei hoch. In diesem Fall wird ebenfalls ein zweiter Zähler eingeführt, der jedoch anders zählt. In Analogie zu dem zweiten Zähler der ersten Variante wird dieser Zähler am Anfang der Zeitmessung einer Bridge-Delay auf 0 gesetzt. Ebenso wird dieser Zähler beim Überschreiten eines virtuellen Kompensationszeitpunkts KP2 um ein Inkrement erhöht bzw. verringert, je nachdem, ob der Quarz des Masterelements schneller oder langsamer als der Quarz des Slaves läuft. Im Unterschied zur ersten Variante wird nunmehr jedoch auch bei Überschreiten eines ursprünglichen Kompensationszeitpunkts KP1 der Zähler C um ein Inkrement erhöht bzw. verringert, denn es wird zu diesem Zeitpunkt nunmehr keine Kompensation basierend auf einem Taktzählzustand eines Slaves durchgeführt.

Die Umrechnung der Zeitmessung $\Delta S$ vom Slave- in das Master-System ergibt sich in Analogie zur ersten Variante wiederum wie folgt:

$$T_{BD} = \Delta S \cdot 10ns + C \cdot 1ns$$
$$\Delta S = S(t_2) - S(t_1)$$

$$(5)$$

Wie sich aus den obigen Ausführungen ergibt, ist in dem erfindungsgemäßen Verfahren die Kompensation zwischen der Uhr eines Slaves und der Uhr des Masterelements nicht mehr an die zeitliche Auflösung des Slaves gebunden, sondern sie wird im Hinblick auf die Auflösung des von dem Masterelement gesendeten Zeitstempels gewählt. Der wesentliche Vorteil dieses Verfahrens liegt darin, dass der Fehler bei der Umrechnung zwischen dem Slave- und dem Master-Zeitsystem wesentlich reduziert wird. Dies ergibt sich auch aus der Fig. 2 und Fig. 3 für die dort gezeigte Bridge-Delay BD, welche bei dem Verfahren der Fig. 2 überhaupt nicht kompensiert wird, wohingegen in Fig. 3 eine Kompensation um eine Nanosekunde stattfindet. Die verbesserte Umrechnung wirkt sich vor allem deshalb positiv aus, weil die Synchronisationsnachrichten in einer Linientopologie in Reihe aufeinander folgend ausgehend vom Masterelement von einem Slave zum nächsten übermittelt werden. D. h., eine Synchronisationsnachricht durchläuft alle Slaves, so dass sich die Fehler aller Slaves aufaddieren.

Nachfolgend wird die mit dem erfindungsgemäßen Verfahren erzielte Verbesserung nochmals an einem Beispiel dargelegt. Es wird davon ausgegangen, dass alle Slaves die gleiche Bridge-Delay und das gleiche RCF-Intervall besitzen. Ist dies der Fall, kann eine Wahrscheinlichkeitsverteilung p(i,m) für die Anzahl i von Kompensationen angegeben werden, welche eine Synchronisationsnachricht auf dem Weg vom Master bis zum Verlassen eines Slaves mit der Nummer m erfahren hat. Diese Wahrscheinlichkeitsverteilung lautet wie folgt:

$$p(i,m) = p_0^m \cdot (1-p_0)^{i-m} \cdot \binom{i}{m} \quad (\texttt{=Binomialverteilung}) \qquad (6)$$

Dabei gibt

$$p_0 = \frac{T_{BD}}{|T_{RCF}|}$$

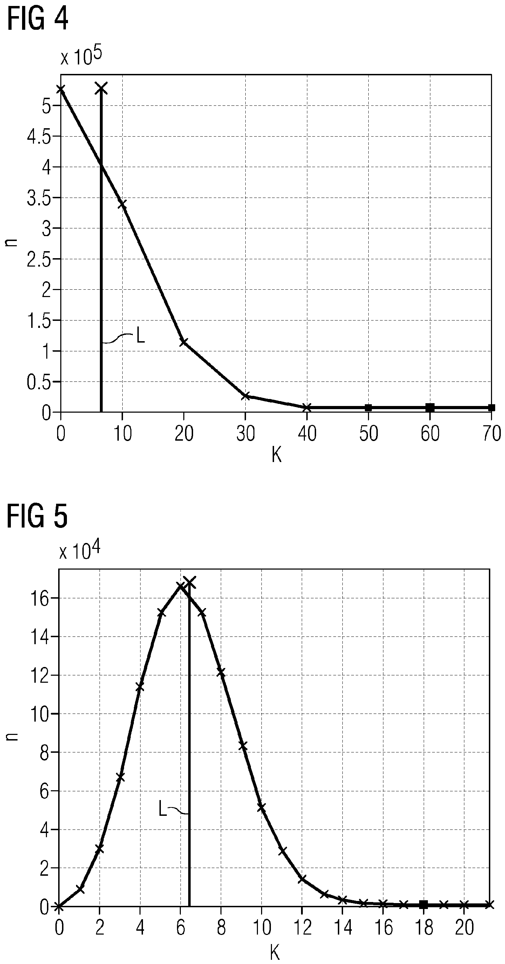

für jeden Slave die Wahrscheinlichkeit an, mit welcher eine Korrektur des Quarzes des Slaves während der Messung der Bridge-Delay BD stattfindet. In Fig. 4 ist für das Verfahren der Fig. 2, welches nur die Kompensationsintervalle KI berücksichtigt, für den Slave mit der Nummer 64 die zu erwartende Verteilung der Kompensationen bei einer Million Synchronisationsnachrichten abgebildet. D. h., in der Fig. 4 sind entlang der Abszisse die Anzahl K der Kompensationen und entlang der Ordinate die entsprechenden Häufigkeiten n für die Kompensationen angegeben. Es wurde dabei von folgenden Werten für das RCF-Intervall $T_{RCF}$ bzw. die Bridge-Delay ausgegangen:

$$T_{RCF} = 0.001\,\mathrm{sec}$$
$$T_{BD} = 10\,\mu\,\mathrm{sec} \quad \Rightarrow \quad p_0 = 0.01 \tag{7}$$

Fig. 5 zeigt auch die Häufigkeiten n der Kompensationen K für den Slave mit der Nummer 64, wobei die Kompensationen nunmehr basierend auf Fig. 3 nicht mehr nur zu den Kompensationszeitpunkten KP1, sondern auch zu den Kompensationszeitpunkten KP2 durchgeführt werden. Dies wird über eine entsprechende Verkürzung des Intervalls $T_{RCF}$ auf die Länge des Kompensationsintervalls KI' erreicht.

Die entsprechende Gerade L in den beiden Verteilungen der Fig. 4 und Fig. 5 markiert den Erwartungswert für die Anzahl der Kompensationen. Dieser ist für beide Verfahren identisch und liegt bei $p_0 \cdot 10ns \cdot 64 = 6{,}4ns$. Wie man deutlich durch Vergleich der Fig. 4 mit Fig. 5 erkennen kann, reduziert sich mit dem Verfahren der Fig. 5 jedoch die Streuung um den Erwartungswert. D. h., der zu erwartende Synchronisationsfehler im Rahmen der RCF-Kompensation, der in den Diagrammen der Fig. 4 und Fig. 5 durch die Differenz zwischen dem Erwartungswert gemäß der Linie L und der Kurve der Häufigkeitsverteilung repräsentiert ist, wird durch das erfindungsgemäße Verfahren signifikant reduziert.

**Patentansprüche**

1. Verfahren zur Übertragung von Synchronisationsnachrichten (SM) in einem Kommunikationsnetz mit einer Mehrzahl von Knoten (M, S1, ..., Sn), wobei die Knoten (M, S1, ..., Sn) einen ersten Knoten (M) und einen oder mehrere zweite Knoten (S1, ..., Sn) umfassen, wobei der erste Knoten (M) erste Taktzählzustände gemäß einer Referenztaktfrequenz (fm) einer Referenzuhr (CM) generiert und der oder die zweiten Knoten (S1, ..., Sn) jeweils zweite Taktzählzustände gemäß einer internen Taktfrequenz (fs) einer internen Uhr (C1, ..., CN) generieren, wobei Synchronisationsnachrichten (SM) ausgehend von dem ersten Knoten (M) aufeinander folgend von einem Knoten (M, S1, ..., Sn) zu einem weiteren Knoten (M, S1, ..., Sn) übertragen werden und jede Synchronisationsnachricht (SM) eine Zeitinformation enthält, welche zur Zeitsynchronisation der internen Uhr (C1, ..., CN) des oder der zweiten Knoten (S1, ..., Sn) auf die Referenzuhr (CM) dient, wobei in einem jeweiligen zweiten Knoten (S1, ..., Sn) die Zeitinformation der Synchronisationsnachricht (SM) basierend auf einer Verzögerungszeit auf den Sendezeitpunkt der Synchronisationsnachricht (SM) in dem jeweiligen zweiten Knoten (S1, ..., Sn) aktualisiert wird, in einem jeweiligen zweiten Knoten (S1, ..., Sn) zumindest eines Teils der zweiten Knoten (S1, ..., Sn) :

   - Kompensationsintervalle (KI) basierend auf aufeinander folgenden Kompensationszeitpunkten (KP1) vorgegeben sind, wodurch eine Anpassung zumindest eines Zeitabschnitts (BD) der Verzögerungszeit gemäß der internen Taktfrequenz (fs) des jeweiligen zweiten Knotens (S1, ..., Sn) an die Referenztaktfrequenz (fm) über eine Veränderung der zweiten Taktzählzustände durchführbar ist;

   **dadurch gekennzeichnet, dass** in dem jeweiligen zweiten Knoten zumindest eines Teils der zweiten Knoten:

   - die Kompensationsintervalle (KI) jeweils in kleinere Kompensationszeitspannen (KI') basierend auf einer Anzahl von zweiten Kompensationszeitpunkten (KP2) unterteilt werden, wobei die Anzahl an Überschreitungen von ersten und zweiten Kompensationszeitpunkten (KP1, KP2) durch den zumindest einen Zeitabschnitt (BD) erfasst wird, wobei für den zumindest einen Zeitabschnitt (BD) ein kompensierter Zeitwert ($T_{BD}$) bestimmt wird, indem der Zeitwert gemäß der Anzahl von zweiten Taktzählzuständen, die innerhalb des zumindest einen Zeitabschnitts (BD) gezählt werden, um das Produkt aus der Anzahl von Überschreitungen und einer Kompensationszeiteinheit verändert wird, wobei die Kompensationszeiteinheit der Periodendauer der internen Taktfrequenz (fs) des jeweiligen zweiten Knotens (S1, ..., Sn) geteilt durch die Anzahl von Kompensationszeitspannen (KI') innerhalb eines Kompensationsintervalls (KI) entspricht, wobei der kompensierte Zeitwert ($T_{BD}$) zur Aktualisierung der Zeitinformation in der Synchronisationsnachricht (SM) verwendet wird.

2. Verfahren nach Anspruch 1, bei dem die Anpassung des zumindest eines Zeitabschnitts (BD) der Verzögerungszeit gemäß der internen Taktfrequenz (fs) des jeweiligen zweiten Knotens (S1, ..., Sn) an die Referenztaktfrequenz (fm) derart durchführbar ist, dass im Falle, dass der zumindest eine Zeitabschnitt (BD) einen ersten Kompensationszeitpunkt (KP1) überschreitet, die Anzahl von zweiten Taktzählzuständen, die für den zumindest einen Zeitabschnitt (BD) bis zum Überschreiten des ersten Kompensationszeitpunkts (KP1) gezählt werden, um die Kompensationszeiteinheit verändert wird.

3. Verfahren nach Anspruch 1 oder 2, bei dem zur Bestimmung des kompensierten Zeitwerts ($T_{BD}$) im Falle, dass der zumindest eine Zeitabschnitt (BD) einen zweiten Kompensationszeitpunkt (KP2) überschreitet, der Zeitwert gemäß der Anzahl von zweiten Taktzählzuständen, die innerhalb des zumindest einen Zeitabschnitts (BD) bis zum Überschreiten des zweiten Kompensationszeitpunkts (KP2) gezählt werden, um die Kompensationszeiteinheit verändert wird.

4. Verfahren nach einem der vorhergehende Ansprüche, bei dem die Anpassung des zumindest eines Zeitabschnitt (BD) der Verzögerungszeit gemäß der internen Taktfrequenz (fs) des jeweiligen zweiten Knotens (S1, ..., Sn) an die Referenztaktfrequenz (fm) durchgeführt ist, wobei im Falle, dass der zumindest eine Zeitabschnitt (BD) einen ersten Kompensationszeitpunkt (KP1) überschreitet, die Anpassung rückgängig gemacht wird.

5. Verfahren nach einem der vorhergehenden Ansprüche in Kombination mit Anspruch 2, bei dem die Anpassung des zumindest eines Zeitabschnitts ($T_{BD}$) der Verzögerungszeit gemäß der internen Taktfrequenz (fs) des jeweiligen zweiten Knotens (S1, ..., Sn) an die Referenztaktfrequenz (fm) durchgeführt wird, wobei im Falle, dass der zumindest eine Zeitabschnitt (BD) einen ersten Kompensationszeitpunkt (KP1) überschreitet, der Zeitwert gemäß der Anzahl von zweiten Taktzählzuständen, die innerhalb des zumindest einen Zeitabschnitts (BD) bis zum Überschreiten des ersten Kompensationszeitpunkts (KP1) gezählt werden und basierend auf der Anpassung verändert werden, um den Zeitwert gemäß der Zeitdifferenz zwischen der Periodendauer der internen Taktfrequenz (fs) des jeweiligen zweiten Knotens (S1, ..., Sn) und der Kompensationszeiteinheit korrigiert wird.

6. Verfahren nach einem der vorhergehenden Ansprüche, bei dem die Anpassung des zumindest eines Zeitabschnitts ($T_{BD}$) der Verzögerungszeit gemäß der internen Taktfrequenz (fs) des jeweiligen zweiten Knotens (S1, ..., Sn) an die Referenztaktfrequenz (fm) nicht durchgeführt wird, wobei im Falle, dass der zumindest eine Zeitabschnitt (BD) einen ersten Kompensationszeitpunkt (KP1) überschreitet, der Zeitwert gemäß der Anzahl von zweiten Taktzählzuständen, die innerhalb des zumindest einen Zeitabschnitts (BD) bis zum Überschreiten des ersten Kompensationszeitpunkts (KP1) gezählt werden, um die Kompensationszeiteinheit verändert wird.

7. Verfahren nach einem der vorhergehenden Ansprüche, bei dem der zumindest eine Zeitabschnitt (BD) eine interne Verarbeitungszeit in dem jeweiligen zweiten Knoten (S1, ..., Sn) zwischen Empfang der Synchronisationsnachricht(SM) und dem Aussenden der Synchronisationsnachricht (SM) ist.

8. Verfahren nach einem der vorhergehenden Ansprüche, bei dem die Zeitsynchronisation auf dem Standard IEEE 1588 oder IEEE1588v2 oder IEC 61158 oder IEEE 802.1AS basiert.

9. Verfahren nach einem der vorhergehenden Ansprüche, bei dem die Knoten (M,..., Sn) basierend auf dem PROFINET-Standard miteinander kommunizieren.

10. Verfahren nach einem der vorhergehenden Ansprüche, bei dem das Verfahren in einem industriellen Automatisierungssystem eingesetzt wird.

11. Knoten zur Verwendung als zweiter Knoten (S1, ..., Sn) in einem Verfahren zur Übertragung von Synchronisationsnachrichten (SM) in einem Kommunikationsnetz mit einer Mehrzahl von Knoten (M, S1, ..., Sn), wobei die Knoten (M, S1, ..., Sn) einen ersten Knoten (M) und einen oder mehrere zweite Knoten (S1, ..., Sn) umfassen, wobei der erste Knoten (M) erste Taktzählzustände gemäß einer Referenztaktfrequenz (fm) einer Referenzuhr (CM) generiert und der oder die zweiten Knoten (S1, ..., Sn) jeweils zweite Taktzählzustände gemäß einer internen Taktfrequenz (fs) einer internen Uhr (C1, ..., CN) generieren, wobei Synchronisationsnachrichten (SM) ausgehend von dem ersten Knoten (M) aufeinander folgend von einem Knoten (M, S1,..., Sn) zu einem weiteren Knoten (M, S1, ..., Sn) übertragen werden und jede Synchronisationsnachricht (SM) eine Zeitinformation enthält, welche zur Zeitsynchronisation der internen Uhr (C1, ..., CN) des oder der zweiten Knoten (S1, ..., Sn) auf die Referenzuhr (CM) dient, wobei in einem jeweiligen zweiten Knoten (S1, ..., Sn) die Zeitinformation der Synchronisationsnachricht (SM) basierend auf einer Verzögerungszeit auf den Sendezeitpunkt der Synchronisationsnachricht (SM) in dem jeweiligen zweiten Knoten (S1, ..., Sn) aktualisiert wird, der Knoten derart ausgestaltet ist, dass im Betrieb des Knotens:

- Kompensationsintervalle (KI) basierend auf aufeinander folgenden Kompensationszeitpunkten (KP1) vorgegeben sind, wodurch eine Anpassung zumindest eines Zeitabschnitts (BD) der Verzögerungszeit gemäß der internen Taktfrequenz (fs) des Knotens (S1, ..., Sn) an die Referenztaktfrequenz (fm) über eine Veränderung der zweiten Taktzählzustände durchführbar ist;
- die Kompensationsintervalle (KI) jeweils in kleinere Kompensationszeitspannen (KI') basierend auf einer Anzahl von zweiten Kompensationszeitpunkten (KP2) unterteilt werden, wobei die Anzahl an Überschreitungen von ersten und zweiten Kompensationszeitpunkten (KP1, KP2) durch den zumindest einen Zeitabschnitt (T$_{BD}$) erfasst wird, wobei für den zumindest einen Zeitabschnitt (T$_{BD}$) ein kompensierter Zeitwert (T$_{BD}$) bestimmt wird, indem der Zeitwert gemäß der Anzahl von zweiten Taktzählzuständen, die innerhalb des zumindest einen Zeitabschnitts (BD) gezählt werden, um das Produkt aus der Anzahl von Überschreitungen und einer Kompensationszeiteinheit verändert wird, wobei die Kompensationszeiteinheit der Periodendauer der internen Taktfrequenz (fs) des jeweiligen zweiten Knotens (S1, ..., Sn) geteilt durch die Anzahl von Kompensationszeitspannen (KI') innerhalb eines Kompensationsintervalls (KI) entspricht, wobei der kompensierte Zeitwert (T$_{BD}$) zur Aktualisierung der Zeitinformation in der Synchronisationsnachricht (SM) verwendet wird.

12. Knoten nach Anspruch 11, wobei der Knoten (S1, ..., Sn) zur Durchführung eines Verfahrens nach einem der Ansprüche 2 bis 10 ausgelegt ist.

13. Kommunikationsnetz mit einer Mehrzahl von Knoten (M, S1, ..., Sn), wobei die Knoten (M, S1,..., Sn) einen ersten Knoten (M) und einen oder mehrere zweite Knoten (S1, ..., Sn) umfassen, wobei im Betrieb des Kommunikationsnetzes der erste Knoten (M) erste Taktzählzustände gemäß einer Referenztaktfrequenz (fm) einer Referenzuhr (CM) generiert und der oder die zweiten Knoten (S1, ..., Sn) jeweils zweite Taktzählzustände gemäß einer internen Taktfrequenz (fs) einer internen Uhr (C1, ..., CN) generieren, wobei Synchronisationsnachrichten (SM) ausgehend von dem ersten Knoten (M) aufeinander folgend von einem Knoten (M, S1,..., Sn) zu einem weiteren Knoten (M, S1, ..., Sn) übertragen werden und jede Synchronisationsnachricht (SM) eine Zeitinformation enthält, welche zur Zeitsynchronisation der internen Uhr (C1, ..., CN) des oder der zweiten Knoten (S1, ..., Sn) auf die Referenzuhr (CM) dient, wobei in einem jeweiligen zweiten Knoten (S1, ..., Sn) die Zeitinformation der Synchronisationsnachricht (SM) basierend auf einer Verzögerungszeit auf den Sendezeitpunkt der Synchronisationsnachricht (SM) in dem jeweiligen zweiten Knoten (S1, ..., Sn) aktualisiert wird, wobei zumindest ein zweiter Knoten (S1, ..., Sn) und insbesondere alle zweite Knoten (S1, ..., Sn) des Kommunikationsnetzes Knoten (S1, ..., Sn) nach Anspruch 11 oder 12 sind.

14. Kommunikationsnetz nach Anspruch 13, welches derart ausgestaltet ist, dass in dem Kommunikationsnetz ein Verfahren nach einem der Ansprüche 2 bis 10 durchführbar ist.

**Claims**

1. Method for transmitting synchronisation messages (SM) in a communications network comprising a plurality of nodes (M, S1, ..., Sn), said nodes (M, S1, ..., Sn) comprising a first node (M) and one or more second nodes (S1, ..., Sn), the first node (M) generating first clock count states according to a reference clock frequency (fm) of a reference clock (CM) and the second node(s) (S1, ..., Sn) each generating second clock count states according to an internal clock frequency (fs) of an internal clock (C1, ..., CN), wherein synchronisation messages (SM) are transmitted, starting from the first node (M), successively from one node (M, S1, ..., Sn) to another node (M, S1, ..., Sn) and each synchronisation message (SM) contains time information which serves to synchronise the internal clock (C1, ..., CN) of the second node(s) (S1, ..., Sn) with the reference clock (CM), wherein in each second node (S1, ..., Sn), the time information of the synchronisation message (SM) is updated, based on a delay time, to the transmission time of the synchronisation message (SM) in the respective second node (S1, ..., Sn), wherein in each second node (S1, ..., Sn) of at least part of the second nodes (S1, ..., Sn) :

   - compensation intervals (KI) based on sequential compensation time points (KP1) are pre-defined, so that adjustment of at least one time segment (BD) of the delay time according to the internal clock frequency (fs) of the respective second node (S1, ..., Sn) to the reference clock frequency (fm) can be carried out by changing the second clock count states;

   **characterised in that** in the respective second node of at least part of the second nodes:

   - the compensation intervals (KI) are each subdivided into smaller compensation timespans (KI') based on a number of second compensation time points (KP2), wherein the number of overshoots of the first and second compensation time points (KP1, KP2) is recorded through the at least one time segment (BD), wherein for the at least one time segment (BD), a compensated time value (T$_{BD}$) is determined, in which the time value according to the number of second clock count states counted within the at least one time segment (BD) is changed by the product of the number of overshoots and a compensation time unit, the compensation time unit corresponding to the period duration of the internal clock frequency (fs) of the respective second node (S1, ..., Sn) divided by the number of compensation timespans (KI') within a compensation time interval (KI), the compensated time value ($T_{BD}$) being used for updating the time information in the synchronisation message (SM).

2. Method according to claim 1, wherein the adjustment of the at least one time segment (BD) of the delay time according to the internal clock frequency (fs) of the respective second node (S1, ..., Sn) to the reference clock frequency (fm) can be carried out such that, in the event that the at least one time segment (BD) exceeds a first compensation time point (KP1), the number of second clock count states which are counted for the at least one time segment (BD) until the first compensation time point (KP1) is exceeded, is changed by the compensation time unit.

3. Method according to claim 1 or 2, wherein for determination of the compensated time value ($T_{BD}$) in the event that the at least one time segment (BD) exceeds a second compensation time point (KP2), the time value is changed, according to the number of second clock count states counted within the at least one time segment (BD) until the second compensation time point (KP2) is exceeded, by the compensation time unit.

4. Method according to one of the preceding claims, wherein the adjustment of the at least one time segment (BD) of the delay time, according to the internal clock frequency (fs) of the respective second node (S1, ..., Sn) to the reference clock frequency (fm) is carried out, wherein in the event that the at least one time segment (BD) exceeds a first compensation time point (KP1), the adjustment is reversed.

5. Method according to one of the preceding claims in combination with claim 2, wherein the adjustment of the at least one time segment ($T_{BD}$) of the delay time according to the internal clock frequency (fs) of the respective second node (S1, ..., Sn) to the reference clock frequency (fm) is carried out, and if the at least one time segment (BD) exceeds a first compensation time point (KP1), the time value according to the number of second clock count states which are counted within the at least one time segment (BD) until the first compensation time point (KP1) is exceeded and which are changed based on the adjustment, is corrected by the time value according to the time difference between the period duration of the internal clock frequency (fs) of the respective second node (S1, ..., Sn) and the compensation time unit.

6. Method according to one of the preceding claims, wherein the adjustment of the at least one time segment ($T_{BD}$) of the delay time according to the internal clock frequency (fs) of the respective second node (S1, ..., Sn) to the reference clock frequency (fm) is not carried out, and if the at least one time segment (BD) exceeds a first compensation time point (KP1), the time value according to the number of second clock count states counted within the at least one time segment (BD) until the first compensation time point (KP1) is exceeded, is adjusted by the compensation time unit.

7. Method according to one of the preceding claims, wherein the at least one time segment (BD) is an internal processing time in each second node (S1, ..., Sn) between reception of the synchronisation message (SM) and transmission of the synchronisation message (SM).

8. Method according to one of the preceding claims, wherein the time synchronisation is based on the standard IEEE 1588 or IEEE1588v2 or IEC 61158 or IEEE 802.1AS.

9. Method according to one of the preceding claims, wherein the nodes (M,..., Sn) communicate with one another based on the PROFINET standard.

10. Method according to one of the preceding claims, wherein the method is utilised in an industrial automation system.

11. Node for use as a second node (S1, ..., Sn) in a method for transmitting synchronisation messages (SM) in a communications network having a plurality of nodes (M, S1, ..., Sn), wherein the nodes (M, S1, ..., Sn) comprise a first node (M) and one or more second nodes (S1, ..., Sn), the first node (M) generating first clock count states according to a reference clock frequency (fm) of a reference clock (CM) and the second node(s) (S1, ..., Sn) each generating second clock count states according to an internal clock frequency (fs) of an internal clock (C1, ..., CN), wherein synchronisation messages (SM) are transmitted, starting from the first node (M), successively from one node (M, S1, ..., Sn) to another node (M, S1, ..., Sn) and each synchronisation message (SM) contains time information which serves to synchronise the internal clock (C1, ..., CN) of the second node(s) (S1, ..., Sn) with the reference clock (CM), wherein in each second node (S1, ..., Sn), the time information of the synchronisation message (SM) is updated, based on a delay time, to the transmission time point of the synchronisation message (SM) in the respective second node (S1, ..., Sn), wherein the node is configured such that, during operation of said node:

- compensation intervals (KI) based on sequential compensation time points (KP1) are pre-defined, so that adjustment of at least one time segment (BD) of the delay time according to the internal clock frequency (fs) of the respective second node (S1, ..., Sn) to the reference clock frequency (fm) can be carried out by changing the second clock count states;
- the compensation intervals (KI) are each subdivided into smaller compensation timespans (KI') based on a number of second compensation time points (KP2), wherein the number of overshoots of the first and second compensation time points (KP1, KP2) is recorded through the at least one time segment ($T_{BD}$), wherein for the at least one time segment ($T_{BD}$), a compensated time value ($T_{BD}$) is determined, in that the time value according to the number of second clock count states counted within the at least one time segment (BD) is changed by the product of the number of overshoots and a compensation time unit, the compensation time unit corresponding to the period duration of the internal clock frequency (fs) of the respective second node (S1, ..., Sn) divided by the number of compensation timespans (KI') within a compensation time interval (KI), the compensated time value ($T_{BD}$) being used for updating the time information in the synchronisation message (SM).

12. Node according to claim 11, wherein the node (S1, ..., Sn) is configured for carrying out a method according to one of the claims 2 to 10.

13. Communications network comprising a plurality of nodes (M, S1, ..., Sn), said nodes (M, S1, ..., Sn) comprising a first node (M) and one or more second nodes (S1, ..., Sn), wherein during operation of the communications network, the first node (M) generates first clock count states according to a reference clock frequency (fm) of a reference clock (CM) and the second node(s) (S1, ..., Sn) each generate second clock count states according to an internal clock frequency (fs) of an internal clock (C1, ..., CN), wherein synchronisation messages (SM) are transmitted, starting from the first node (M), successively from one node (M, S1, ..., Sn) to another node (M, S1, ..., Sn) and each synchronisation message (SM) contains time information which serves to synchronise the internal clock (C1, ..., CN) of the second node(s) (S1, ..., Sn) with the reference clock (CM), wherein in each second node (S1, ..., Sn), the time information of the synchronisation message (SM) is updated, based on a delay time, to the transmission time point of the synchronisation message (SM) in the respective second node (S1, ..., Sn), wherein at least one second node (S1, ..., Sn) and, in particular, all second nodes (S1, ..., Sn) of the communications network (S1, ..., Sn) are nodes according to claim 11 or 12.

14. Communications network according to claim 13, configured such that a method according to one of the claims 2 to 10 can be carried out in the communications network.

## Revendications

1. Procédé de transmission de messages de synchronisation (SM) dans un réseau de communication comportant une pluralité de noeuds (M, S1, ..., Sn), les noeuds (M, S1, ..., Sn) comprenant un premier noeud (M) et un ou plusieurs deuxièmes noeuds (S1, ..., Sn), le premier noeud (M) générant de premiers états de comptage d'horloge conformément à une fréquence d'horloge de référence (fm) d'une horloge de référence (CM) et le ou les deuxièmes noeuds (S1, ..., Sn) générant respectivement de deuxièmes états de comptage d'horloge conformément à une fréquence d'horloge interne (fs) d'une horloge interne (C1, ..., CN), des messages de synchronisation (SM) étant transmis, partant du premier noeud (M), successivement d'un noeud (M, S1, ..., Sn) vers un autre noeud (M, S1, ..., Sn) et chaque message de synchronisation (SM) contenant une information de temps qui sert à la synchronisation temporelle de l'horloge interne (C1, ..., CN) du ou des deuxièmes noeuds (S1, ..., Sn) sur l'horloge de référence (CM), l'information de temps du message de synchronisation (SM) étant, dans un deuxième noeud respectif (S1, ..., Sn), actualisée, sur la base d'un temps de retard, sur l'instant d'émission du message de synchronisation (SM) dans le deuxième noeud respectif (S1, ..., Sn), dans un deuxième noeud respectif (S1, ..., Sn) d'au moins une partie des deuxièmes noeuds (S1, ..., Sn) :

- étant spécifiés des intervalles de compensation (KI) sur la base d'instants de compensation successifs (KP1), ce qui permet d'effectuer une adaptation d'au moins une période de temps (BD) du temps de retard conformément à la fréquence d'horloge interne (fs) du deuxième noeud respectif (S1, ..., Sn) à la fréquence d'horloge de référence (fm) par l'intermédiaire d'une modification des deuxièmes états de comptage d'horloge ;

**caractérisé en ce que**, dans le deuxième noeud respectif d'au moins une partie des deuxièmes noeuds :

- les intervalles de compensation (KI) sont subdivisés respectivement en plus petits laps de temps de compensation (KI') sur la base d'un nombre de deuxièmes instants de compensation (KP2), le nombre de dépassements de premiers et de deuxièmes instants de compensation (KP1, KP2) par l'au moins une période de temps (BD) étant détecté, une valeur de temps compensée ($T_{BD}$) étant déterminée pour l'au moins une période de temps (BD) par modification de la valeur de temps, conformément au nombre de deuxièmes états de comptage d'horloge comptés dans l'au moins une période de temps (BD), à concurrence du produit du nombre de dépassements et d'une unité de temps de compensation, l'unité de temps de compensation correspondant à la durée de période de la fréquence d'horloge interne (fs) du deuxième noeud respectif (S1, ..., Sn) divisée par le nombre de laps de temps de compensation (KI') dans un intervalle de compensation (KI), la valeur de temps compensée ($T_{BD}$) étant utilisée pour actualiser l'information de temps dans le message de synchronisation (SM).

2. Procédé selon la revendication 1, dans lequel l'adaptation de l'au moins une période de temps (BD) du temps de retard conformément à la fréquence d'horloge interne (fs) du deuxième noeud respectif (S1, ..., Sn) à la fréquence d'horloge de référence (fm) peut être effectuée de telle sorte que, si l'au moins une période de temps (BD) dépasse un premier instant de compensation (KP1), le nombre de deuxièmes états de comptage d'horloge comptés pour l'au moins une période de temps (BD) jusqu'au dépassement du premier instant de compensations (KP1) est modifié à concurrence de l'unité de temps de compensation.

3. Procédé selon la revendication 1 ou 2, dans lequel, pour déterminer la valeur de temps compensée ($T_{BD}$) si l'au moins une période de temps (BD) dépasse un deuxième instant de compensation (KP2), la valeur de temps est modifiée conformément au nombre de deuxièmes états de comptage d'horloge comptés dans l'au moins une période de temps (BD) jusqu'au dépassement du deuxième instant de compensation (KP2) à concurrence de l'unité de temps de compensation.

4. Procédé selon l'une des revendications précédentes, dans lequel est effectuée l'adaptation, à la fréquence d'horloge de référence (fm), de l'au moins une période de temps (BD) du temps de retard conformément à la fréquence d'horloge interne (fs) du deuxième noeud respectif (S1, ..., Sn), l'adaptation étant annulée si l'au moins une période de temps (BD) dépasse un premier instant de compensation (KP1).

5. Procédé selon l'une des revendications précédentes en combinaison avec la revendication 2, dans lequel est effectuée l'adaptation de l'au moins une période de temps ($T_{BD}$) du temps de retard conformément à la fréquence d'horloge interne (fs) du deuxième noeud respectif (S1, ..., Sn) à la fréquence d'horloge de référence (fm), la valeur de temps, si l'au moins une période de temps (BD) dépasse un premier instant de compensation (KP1), étant corrigée, conformément au nombre de deuxièmes états de comptage d'horloge comptés dans l'au moins une période de temps (BD) jusqu'au dépassement du premier instant de compensation (KP1) et modifiés sur la base de l'adaptation, à concurrence de la valeur de temps selon la différence de temps entre la durée de période de la fréquence d'horloge interne (fs) du deuxième noeud respectif (S1, ..., Sn) et l'unité de temps de compensation.

6. Procédé selon l'une des revendications précédentes, dans lequel n'est pas effectuée l'adaptation de l'au moins une période de temps ($T_{BD}$) du temps de retard conformément à la fréquence d'horloge interne (fs) du deuxième noeud respectif (S1, ..., Sn) à la fréquence d'horloge de référence (fm), la valeur de temps, si l'au moins une période de temps (BD) dépasse un premier instant de compensation (KP1), étant modifiée à concurrence de l'unité de temps de compensation conformément au nombre de deuxièmes états de comptage d'horloge comptés dans l'au moins une période de temps (BD) jusqu'au dépassement du premier instant de compensation (KP1).

7. Procédé selon l'une des revendications précédentes, dans lequel l'au moins une période de temps (BD) est un temps de traitement interne dans le deuxième noeud respectif (S1, ..., Sn) entre la réception du message de synchronisation (SM) et l'émission du message de synchronisation (SM).

8. Procédé selon l'une des revendications précédentes, dans lequel la synchronisation temporelle est basée sur la norme IEEE 1588 ou IEEE1588v2 ou IEC 61158 ou IEEE 802.1AS.

9. Procédé selon l'une des revendications précédentes, dans lequel les noeuds (M,..., Sn) communiquent entre eux sur la base de la norme PROFINET.

**10.** Procédé selon l'une des revendications précédentes, dans lequel le procédé est mis en oeuvre dans un système d'automatisation industriel.

**11.** Noeud destiné a être utilisé en tant que deuxième noeud (S1, ..., Sn) dans un procédé pour la transmission de messages de synchronisation (SM) dans un réseau de communication comportant une pluralité de noeuds (M, S1, ..., Sn), les noeuds (M, S1, ..., Sn) comprenant un premier noeud (M) et un ou plusieurs deuxièmes noeuds (S1, ..., Sn), le premier noeud (M) générant de premiers états de comptage d'horloge conformément à une fréquence d'horloge de référence (fm) d'une horloge de référence (CM) et le ou les deuxièmes noeuds (S1, ..., Sn) générant respectivement de deuxièmes états de comptage d'horloge conformément à une fréquence d'horloge interne (fs) d'une horloge interne (C1, ..., CN), des messages de synchronisation (SM) étant transmis, partant du premier noeud (M), successivement d'un noeud (M, S1, ..., Sn) vers un autre noeud (M, S1, ..., Sn) et chaque message de synchronisation (SM) contenant une information de temps qui sert à la synchronisation temporelle de l'horloge interne (C1, ..., CN) du ou des deuxièmes noeuds (S1, ..., Sn) sur l'horloge de référence (CM), l'information de temps du message de synchronisation (SM) étant, dans un deuxième noeud respectif (S1, ..., Sn), actualisée, sur la base d'un temps de retard, sur l'instant d'émission du message de synchronisation (SM) dans le deuxième noeud respectif (S1, ..., Sn), le noeud étant conçu de telle sorte que, lors du fonctionnement du noeud :

- des intervalles de compensation (KI) sont spécifiés sur la base d'instants de compensation successifs (KP1), ce qui permet d'effectuer une adaptation d'au moins une période de temps (BD) du temps de retard conformément à la fréquence d'horloge interne (fs) du noeud (S1, ..., Sn) à la fréquence d'horloge de référence (fm) par l'intermédiaire d'une modification des deuxièmes états de comptage d'horloge ;
- les intervalles de compensation (KI) sont subdivisés respectivement en plus petits laps de temps de compensation (KI') sur la base d'un nombre de deuxièmes instants de compensation (KP2), le nombre de dépassements de premiers et de deuxièmes instants de compensation (KP1, KP2) par l'au moins une période de temps ($T_{BD}$) étant détecté, une valeur de temps compensée ($T_{BD}$) étant déterminée pour l'au moins une période de temps (BD) par modification de la valeur de temps, conformément au nombre de deuxièmes états de comptage d'horloge comptés dans l'au moins une période de temps (BD), à concurrence du produit du nombre de dépassements et d'une unité de temps de compensation, l'unité de temps de compensation correspondant à la durée de période de la fréquence d'horloge interne (fs) du deuxième noeud respectif (S1, ..., Sn) divisée par le nombre de laps de temps de compensation (KI') dans un intervalle de compensation (KI), la valeur de temps compensée ($T_{BD}$) étant utilisée pour actualiser l'information de temps dans le message de synchronisation (SM) .

**12.** Noeud selon la revendication 11, le noeud (S1, ..., Sn) étant conçu pour exécuter un procédé selon l'une des revendications 2 à 10.

**13.** Réseau de communication comportant une pluralité de noeuds (M, S1, ..., Sn), les noeuds (M, S1,..., Sn) comprenant un premier noeud (M) et un ou plusieurs deuxièmes noeuds (S1, ..., Sn), le premier noeud (M), lors du fonctionnement du réseau de communication, générant de premiers états de comptage d'horloge conformément à une fréquence d'horloge de référence (fm) d'une horloge de référence (CM) et le ou les deuxièmes noeuds (S1, ..., Sn) générant respectivement de deuxièmes états de comptage d'horloge conformément à une fréquence d'horloge interne (fs) d'une horloge interne (C1, ..., CN), des messages de synchronisation (SM) étant transmis, partant du premier noeud (M), successivement d'un noeud (M, S1,..., Sn) vers un autre noeud (M, S1, ..., Sn) et chaque message de synchronisation (SM) contenant une information de temps qui sert à la synchronisation temporelle de l'horloge interne (C1, ..., CN) du ou des deuxièmes noeuds (S1, ..., Sn) sur l'horloge de référence (CM), l'information de temps du message de synchronisation (SM) étant, dans un deuxième noeud respectif (S1 ..., Sn), actualisée sur la base d'un temps de retard sur l'instant d'émission du message de synchronisation (SM) dans le deuxième noeud respectif (S1, ..., Sn), au moins un deuxième noeud (S1, ..., Sn), et plus particulièrement tous les deuxièmes noeuds (S1, ..., Sn) du réseau de communication étant des noeuds (S1, ..., Sn) selon la revendication 11 ou 12.

**14.** Réseau de communication selon la revendication 13, conçu de telle sorte qu'un procédé selon l'une des revendications 2 à 10 peut être exécuté.

# FIG 1

# FIG 2

# FIG 3

## FIG 4

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Clock synchronization based on distributed hidden state estimation. **CHONGNING NA et al.** PRECISION CLOCK SYNCHRONIZATION FOR MEASUREMENT, CONTROL AND COMMUNICATION, 2009. ISPCS 2009. INTERNATIONAL SYMPOSIUM ON. IEEE, 12. Oktober 2009, 1-6